# EUROPEAN PATENT APPLICATION

(11) **EP 4 814 889 A1**
(43) Date of publication of application: **30.09.2026**
(21) Application number: 26166790.1
(22) Date of filing: 23.03.2026
(51) Int. Cl.: G06V 10/762, G06V 10/771, G06V 10/82, G06V 20/20, G06V 10/77

(54) **MULTI-SCAN CLUSTERING FOR ROBUST VISUAL PLACE RECOGNITION**

(30) Priority: 25.03.2025 US 202563777237 P
(71) Applicant: GoodMaps Inc., Louisville, Kentucky 40206 (US)
(72) Inventor: MIRZAEI, Fatemeh, Louisville, 40206 (US); MEREDITH, Charlie, Louisville, 40206 (US)
(74) Representative: Davis, Steven George

(57) **Abstract**

Implementations disclosed herein are directed to visual place recognition (VPR) for localization of a user in an environment. Processor(s) of a system can receive vision data from a client device, and can process the vision data to generate a feature cloud. The system can further process the feature cloud to identify a subset of clusters of candidate maps. The system can further process the subset of clusters of candidate maps to reduce a dimensionality thereof. The system can further select a given map as an operational map for the environment of the client device. The system can further cause the operational map to be used, for example, for indoor navigation, asset tracking, interactive virtual tours, and/or other uses.

## Description

### Background

Various localization techniques have been proposed that can aid humans (referred to herein as "users") in determining an environment in which they are located, identifying points of interest in the environment in which they are located, navigating through the environment, etc. For example, many users have client devices, such as smartphones, that are equipped with GPS sensor(s) and/or other location sensor(s). These users can interact with various software applications (e.g., via their client devices) that leverage sensor data generated by the GPS sensor(s) and/or other location sensor(s) of the smartphones. For instance, a user can interact with a navigational software application that leverages this sensor data to determine the user's current location, identify businesses or other points of interest that are near the user's current location, provide directions to a desired business and/or other point of interest specified by the user, and so on. However, current localization techniques suffer from one or more drawbacks.

As one example, most localization techniques are limited to determining a user's location with respect to a global frame of reference. For instance, most localization techniques determine a user's location with respect to longitude and latitude or with respect to particular location identifiers (e.g., street addresses, plus codes, etc.). However, the user's location with respect to a global frame of reference is insufficient in aiding the user in many instances, such as when the user's location is within a multi-story building where the user's longitude and latitude can be the same for each story of the multi-story building. As another example, some localization techniques determine a user's location with respect to a local frame of reference. For instance, some localization techniques utilize vision-based machine learning (ML) techniques to analyze vision data capturing an environment of the user, compare features captured in the vision data to features of maps that were previously generated for a plurality of different environments, and determine the environment of the user based on the comparing. However, these vision-based ML techniques are computationally intensive. Accordingly, there is a need in the art for localization techniques that mitigate and/or obviate these drawbacks.

### Summary

Implementations disclosed herein are directed processor(s) of a system that can obtain vision data that captures an environment of a user, the vision data being generated by one or more vision components of a client device of the user, during a given scan of the environment of the user. The system can process the vision data that captures the environment of the user to generate or extract a feature cloud corresponding to the environment of the user. Further, the system can process the feature cloud corresponding to the environment of the user to identify a subset of clusters of candidate maps, from among a superset of clusters of candidate maps, that are predicted to correspond to the environment of the user. Moreover, the system can process the subset of clusters of candidate maps to generate a reduced dimensionality subset of clusters of candidate maps that is of a reduced dimensionality relative to the subset of clusters of candidate maps. Furthermore, the system can select a given map, from among the reduced dimensionality subset of clusters of candidate maps, to be utilized as an operational map for the environment of the user, and cause the given map corresponding to the environment of the user to be utilized as the operational map for the environment of the user.

Implementations disclosed herein can mitigate (e.g., eliminate) various drawbacks with current techniques. For example, while prior systems determine a user's location with respect to a global frame of reference (e.g., longitude and latitude), implementations disclosed herein obtain vision data that captures the user's environment and select a given map that corresponds to the environment. As another example, while current visual-based ML techniques are computationally intensive, implementations disclosed herein identify a subset of clusters of candidate maps and generate a reduced dimensionality subset of clusters of candidate maps prior to selecting a given map. As another example, pre-processing steps, such as clustering candidate maps and reducing the dimensionality of the feature clouds, results in faster localization, improved accuracy, and the ability to support larger-scale environments with more scans and concurrent users.

As a non-limiting example of some implementations disclosed herein, consider a user navigating inside a large shopping mall. The user can launch a mobile application on their smartphone, which captures video data using the phone's camera. The system can process this video data to generate or extract a feature cloud that represents the user's surroundings. This feature cloud can then be compared to a database of pre-existing maps / feature clouds, which have been organized into clusters representing different areas within the mall or other locations, such as specific stores, food courts, entrances, other malls or buildings. To reduce latency in localizing the user within the mall, the system can first identify a subset of candidate map clusters that are most likely to match the user's current location. This is performed based on feature clouds to improve accuracy and reduce latency. Once the search space is narrowed down, a dimensionality reduction technique can be applied to reduce the dimensionality of the feature clouds within the candidate clusters, further reducing latency the matching process. Ultimately, the system selects a given map from cluster that best aligns with the user's video data, providing an operational map that displays the user's current location, nearby stores, and navigation information to reach a desired destination.

In some implementations, the system obtains additional vision data to aid in localizing the user. This involves processing additional visual information from the user's surroundings, either from the same scan or an additional scan of the environment. The system processes this additional visual data to create an additional feature cloud. This additional feature cloud is used to identify an additional subset of clusters of candidate maps. In evaluating the subset of clusters of candidate maps and the additional subset of clusters of candidate maps, a confidence score can be used to decide whether to further process the subset of clusters of candidate maps or the additional subset of clusters of candidate maps. For instance, if the first image was somewhat blurry or obstructed, the additional image would give the original feature cloud a higher confidence and it could then be chosen for further processing.

In some implementations, after the system has already selected a map, it looks at additional vision data to double-check its initial decision or potentially choose a better map. To do this, the system obtains additional vision data, either from the same scan or from an additional scan of the environment, and generates or extracts an additional feature cloud. The additional feature cloud is utilized to identify an additional subset of clusters of candidate maps, which can be processed in the same or similar manner as described above. At this point, the system can either confirm that the originally selected given map is still the best choice, or it can switch to a given additional map. For example, if the system was unsure between the food court and the movie theater, processing the vision data from an additional image can help the system choose a map related to either.

In some versions of those implementations, the vision data can be an image and the additional vision data can be another image captured during the same scan or an additional scan. These images can be captured in sequence as the user moves through the environment, essentially creating a video as the user navigates, and each frame can be analyzed to refine the location. For example, in the shopping mall scenario, each image can contribute towards generating clusters to be used for the selection. In some instances, there is a certain number of possible maps in the subset of clusters of candidate maps (N) and the processing can occur to narrow down these possible locations that best fit the environment of the user. For instance, the "N" could represent five maps in the system's memory or in a remote server that can relate to the visual data for selection.

In some implementations, the system can continuously obtain and process vision data to generate or extract corresponding feature clouds, but may only process the corresponding feature clouds in response to receiving localization requests from the client device. For instance, the corresponding feature clouds can be stored for later use. Accordingly, in response to receiving the localization requests, the pre-processed corresponding feature cloud(s) can be fetched from storage, thereby reducing latency in localizing the user.

In some implementations, and in causing the given map to be utilized as the operational map, the system can use the operational map to be utilized as the means for navigational directions or a visual guide for the user's location. For instance, as the user scans an environment with visual obstacles (or even auditory) such as the crowdedness of a stadium concourse, those can also be selected by a filter and identified in the guide so as to avoid collision or other safety risks. In additional or alternative implementations, and in causing the given map to be utilized as the operational map, the system can use the operational map to be utilized as the means for providing information in the area surrounding points of interest. For instance, for accessibility environments the client device can provide alternate routes to wheelchairs or mobility restrictions to specific points of interest.

In some implementations, the system processes data from a visual place recognition (VPR) algorithm to generate or extract the feature clouds described herein. The VPR algorithm can be NetVLAD or DINOv2. NetVLAD has been found to be more accurate but needs more computational resources and can only run on GPUs to achieve desirable latency, whereas DINOv2 can run on CPUs while achieving desirable latency, potentially increasing the number of concurrent users supported.

In some implementations, a hierarchical clustering algorithm organizes the feature clouds described herein, facilitating a structured method for identifying clusters. For example, the hierarchical clustering algorithm can be an agglomerative clustering algorithm. Agglomerative clustering helps group each scan based on feature scans and clusters groups based on the distance of the feature class to one another.

In some implementations, a dimensionality reduction algorithm is utilized to reduce the computational burden associated with large datasets. For example, the dimensionality reduction algorithm can be a principal component analysis algorithm that can create a series of data points, find the most important relationships between the points, and represent these points in a smaller series or list of points while retaining the relationships.

The above description is provided as an overview of only some implementations disclosed herein. Those implementations, and other implementations, are described in additional detail herein. Further, it should be understood that techniques disclosed herein can be implemented by processor(s) locally on a client device, remotely by server(s) connected to the client device via one or more networks, and/or both.

### Brief Description of the Drawings

FIG. 1 depicts a block diagram of an example environment that demonstrates various aspects of the present disclosure, and in which implementations disclosed herein can be implemented.
FIG. 2 depicts an example process flow of localization of a user in an environment, in accordance with various implementations.
FIG. 3 depicts a flowchart illustrating an example method of utilizing a multi-scan localization technique to localize a user in an environment, in accordance with various implementations.
FIGS. 4A and 4B depict various non-limiting examples of utilizing an operational map determined based on localization of a user in an environment, in accordance with various implementations.
FIG. 5 depicts an example architecture of a computing device, in accordance with various implementations.

### Detailed Description

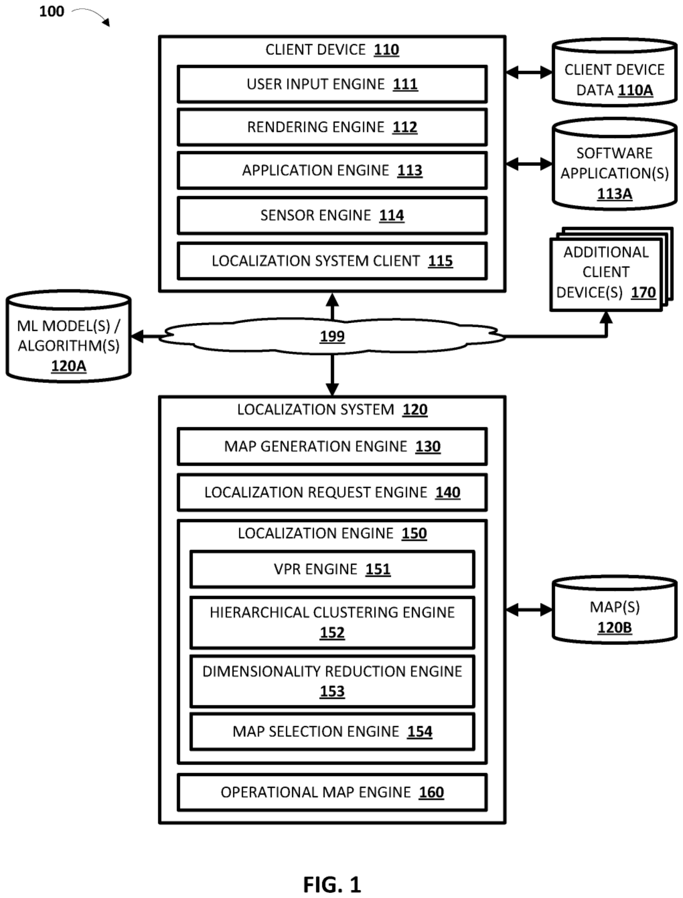

Turning now to FIG. 1, a block diagram of an example environment 100 that demonstrates various aspects of the present disclosure, and in which implementations disclosed herein can be implemented is depicted. The example environment 100 includes a client device 110 and a localization system 120. In some implementations, the localization system 120 can be implemented locally at the client device 110 via localization system client 115. In additional or alternative implementations, the localization system 120 can be implemented remotely from the client device 110 as depicted in FIG. 1 (e.g., at remote server(s) at a physical location of the user of the client device 110 but remote from the client device 110, at remote server(s) that are remote from the physical location of the user of the client device 110). In these implementations, the client device 110 and the localization system 120 may be communicatively coupled with each other via one or more networks 199, such as one or more wired or wireless local area networks ("LANs," including WIFI networks, mesh networks, BLUETOOTH networks, near-field communication networks, etc.) or wide area networks ("WANs", including the Internet).

The client device 110 may be, for example, one or more of: a desktop computer, a laptop computer, a tablet, a mobile phone, a computing device of a vehicle (e.g., an in-vehicle communications system, an in-vehicle entertainment system, an in-vehicle navigation system), a standalone interactive speaker (optionally having a display), a smart appliance such as a smart television, and/or a wearable apparatus of the user that includes a computing device (e.g., a watch of the user having a computing device, glasses of the user having a computing device, a virtual or augmented reality computing device). Additional and/or alternative client devices may be provided.

The client device 110 can execute the localization system client 115. An instance of the localization system client 115 can be a software application that is separate from an operating system of the client device 110 (e.g., installed "on top" of the operating system) - or can alternatively be implemented directly by the operating system of the client device 110. The localization system client 115 can interact with the localization system 120 via one or more of the networks 199 as depicted in FIG. 1 when the localization system 120 is remote from the client device 110. Additionally, or alternatively, and as noted above, the localization system client 115 can implement the localization system 120 locally at the client device. Additionally, or alternatively, the localization system client 115 can interact with the localization system 120 to implement the localization system 120 in a distributed manner.

In various implementations, the client device 110 may include a user input engine 111 that is configured to user input(s) provided by a user of the client device 110 via or more user interface input devices. For example, the client device 110 may be equipped with one or more microphones that capture audio data, such as audio data corresponding to spoken utterances of the user or other sounds in an environment of the client device 110. The audio data can be processed using various components of the client device 110 and/or the localization system 120 to identify content included in the spoken utterance (e.g., using automatic speech recognition (ASR) model(s), natural language understanding (NLU) model(s), generative model(s), etc.). Additionally, or alternatively, the client device 110 may be equipped with one or more touch sensitive components (e.g., a keyboard and mouse, a stylus, a touch screen, a touch panel, one or more hardware buttons, etc.) that are configured to capture signal(s) corresponding to typed and/or touch input directed to the client device 110. In some implementations, the client device 110 can utilize client device data (e.g., stored in the client device data database 110A) in interpreting user input(s) provided by a user of the client device 110.

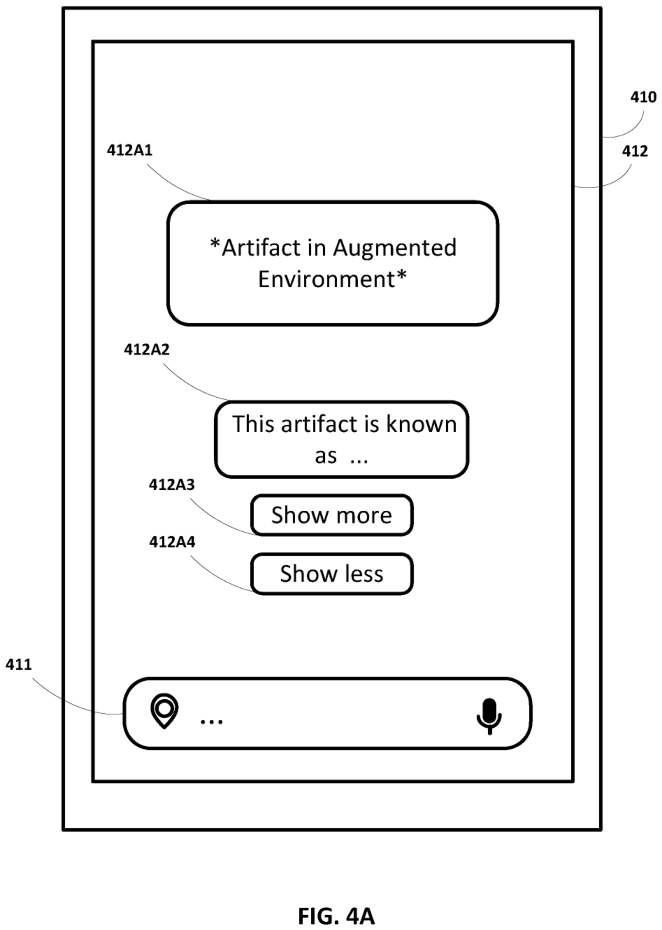

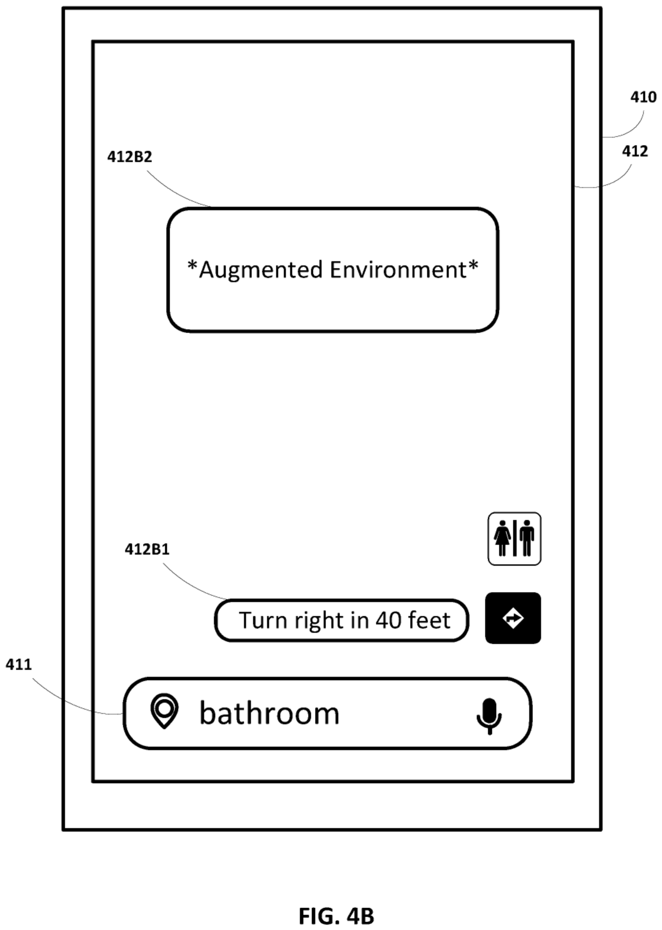

In various implementations, the client device 110 may include a rendering engine 112 that is configured to render content for audible and/or visual presentation to a user of the client device 110 using one or more user interface output devices. For example, the client device 110 may be equipped with one or more speakers that enable content to be provided for audible presentation to the user via the client device 110. Additionally, or alternatively, the client device 110 may be equipped with a display or connected to another client device that includes a display or projector that enables content to be provided for visual presentation to the user via the client device 110. In some implementations, content may be visually rendered in a streaming manner at the client device 110 (e.g., as described with respect to FIGS. 4A and 4B).

In various implementations, the client device 110 may include an application engine 113 that is configured to execute various software applications. In some implementations, one or more of the software applications can be installed locally at the client device 110 as indicated by software application(s) database 113A. In additional or alternative implementations, one or more of the software applications can be hosted remotely (e.g., by server(s)) and can be accessible by the client device 110 over one or more of the networks 199. As described herein (e.g., with respect to FIGS. 4A and 4B), one or more software applications that are accessible by the client device 110 can leverage data generated locally at the client device 110 (e.g., location data, vision data, user input data, and/or other data described herein) in localization of user(s) in environment(s).

In various implementations, the client device 110 may include a sensor engine 114 that is configured to obtain sensor data generated by sensor(s) of the client device 110. As some non-limiting examples, the sensor(s) of the client device 110 may include vision component(s) (e.g., RGB camera(s), 2D camera(s), 2.5D camera(s), 3D camera(s), LiDAR sensor(s), etc.), location sensor(s) (e.g., GPS sensor(s), RFID sensor(s), NFC sensor(s)), gyroscope(s), accelerometer(s), motion sensor(s), inertial measurement unit(s) (IMU(s)), altimeter(s), and/or other sensors. Notably, the sensor engine 114 may obtain the sensor data directly from the corresponding sensors of the client device 110 or via an application programming interface (API) of the client device 110 that is provided by a manufacturer of the client device 110.

In various implementations, the client device 110 and/or the localization system 120 may include memory and/or other storage devices for storage of data and/or software applications. Further, the client device 110 and/or the localization system 120 may include one or more processors for accessing data and/or executing the software applications. Moreover, the client device 110 and/or the localization system 120 may include other components that facilitate communication over one or more of the networks 199, such as one or more network interfaces. The client device 110 and/or the localization system 120 may include other components (e.g., as described with respect to FIG. 8).

As depicted in FIG. 1, the localization system 120 may include a map generation engine 130, a localization request engine 140, a localization engine 150, and an operational map engine 160. One or more of these various engines of the localization system 120 may include sub-engines. For example, the localization engine 150 may include a visual place recognition (VPR) engine 151, a hierarchical clustering engine 152, a dimensionality reduction engine 153, and a map selection engine 154. Although particular engines and sub-engines are depicted in FIG. 1, it should be understood that is for the sake of example and to illustrate aspects of techniques described herein, and is not meant to be limiting. For example, various engine and/or sub-engines can be added, combined, and/or omitted.

As described herein, the client device 110 and/or the localization system 120 can process sensor data (e.g., from the sensor engine 114 of the client device 110) using machine learning (ML) model(s) and/or algorithms (e.g., stored in ML model(s) / algorithm(s) database 120A) to localize user(s) in environment(s)to localize user(s) in environment(s). However, prior to the client device 110 and/or the localization system 120 being utilized to localize user(s) in environment(s), map(s) of the environment(s) need to be generated and stored in map(s) database 120B. Accordingly, in various implementations, the map generation engine 130 may be configured to generate the map(s) of the environment(s) and store the map(s), or feature clouds corresponding to the map(s), in the map(s) database 120B.

In some versions of those implementations, vision data may be obtained via vision component(s) while a user (e.g., the user of the client device 110 or another user of additional client device(s) 170) traverses through a given environment. In these implementations, a given map corresponding to the given environment can be generated based on the vision data obtained while the user traverses through the given environment. For example, assume that the user enters a multi-story building and begins walking throughout a first floor of the building. In this example, as the user is walking throughout the first floor of the building, the vision components can capture the vision data that is utilized to generate a map for the first floor of the building. For instance, the vision components may include a LiDAR sensor(s) that generate LiDAR data as the vision data, and the LiDAR data can be constructed into a 3D point cloud and/or a 2D or 3D floor plan, thereby generating the map for the first floor of the building (e.g., as the 3D point cloud, the 2D floor plan, or the 3D floor plan). The map for the first floor of the building can be generated based on additional data as well (e.g., pose data, inertial measurement unit (IMU) data, other vision data from RGB camera(s) and/or other camera(s), and/or other data). The user can walk throughout the remaining floors of the building to generate corresponding maps for each of the remaining floors of the multi-story building in the same or similar manner.

In additional or alternative versions of those implementations, vision data may be obtained via vision component(s) while a robot autonomously or semi-autonomously traverses through a given environment. Similarly, in these implementations, a given map corresponding to the given environment can be generated based on the vision data obtained while the robot traverses through the given environment. For example, assume that the robot is placed in a multi-story building and begins autonomously or semi-autonomously navigating throughout a first floor of the building. In this example, as the robot navigates throughout the first floor of the building, the vision components can capture the vision data that is utilized to generate a map for the first floor of the building. The map for the first floor of the building may be generated in the same or similar manner described above, and the robot can navigate throughout the remaining floors of the building to generate corresponding maps for each of the remaining floors of the multi-story building in the same or similar manner.

In additional or alternative versions of those implementations, the VPR engine 151 can process the vision data to generate or extract corresponding feature clouds that can be stored in association with the map(s). The corresponding feature clouds can be utilized to compare feature clouds generated or extracted at inference time to the stored corresponding feature clouds, which is less computationally intensive relative to comparing raw features of the vision data to the map(s) themselves and more scalable relative to comparing raw features of the vision data to the map(s) themselves. In processing the vision data to generate or extract the corresponding feature clouds, the VPR engine 151 can utilize a VPR ML model or algorithm (e.g., stored in the ML model(s) / algorithm(s) database 120A), such as a convolutional neural network (CNN) with a NetVLAD layer that can be executed using graphics processing unit(s) (GPU(s)), a DINOv2 algorithm that can be executed using central processing unit(s) (CPU(s)), etc. Further, the hierarchical clustering engine 152 can process the corresponding feature clouds to generate a superset of clusters of candidate maps. Put another way, the hierarchical clustering engine 152 can cluster the corresponding feature clouds that are similar to help restrict a search space at inference time to candidate maps that share features with an environment of a user, which also helps conserve computational resources and scale this approach for localization. In processing the corresponding feature clouds, the hierarchical clustering engine 152 can utilize an agglomerative clustering algorithm or some other unsupervised clustering algorithm (e.g., stored in the ML model(s) / algorithm(s) database 120A).

In some versions of those implementations, and subsequent to generating the map(s) (e.g., based on the user traversing through the environment(s) and/or based on the robot navigating through the environment(s)), the map(s) may be augmented by information related to points of interest in the environment(s). Continuing with the above example, any points of interest for the first floor of the building can be labeled, various levels of information about the points of interest for the first floor of the building can be provided, semantic properties about various points of interest for the first floor of the building can be provided, one or more obstacles in the first floor of the building can be identified and magnified or otherwise demarcated, adjacent map(s) can be identified and included in the map(s) and/or the relationship of the adjacent map(s) (e.g., same floor of a building, same zone of a building, etc.) can be identified and included in the map(s), and/or otherwise augmented.

For instance, assume that the multi-story building from the above example is a museum. In this instance, the points of interest that are labeled can include an information booth, bathrooms, elevators, escalators, stairs, cafes, gift shops, artifacts, exhibits, and/or other points of interest. Further, the information booth can be augmented with services that the information booth may provide (e.g., guided tours, accessibility assistance, etc.); the bathroom signs and/or doors can be augmented with different genders; the elevators, stairs, and escalators can be augmented with information about where they can take users; the cafes and gift shops can be augmented with information such as menus and prices of menu items, gifts for sale and prices of the gifts for sale; and the artifacts or exhibits can be augmented with information related to the artifacts or exhibits such as origin information, historical information, and/or other information. Notably, this information may be dynamically presented to users as they traverse through the environment (e.g., as described with respect to FIGS. 4A and 4B). Moreover, any obstacles in the environment may also be considered points of interest. For instance, further assume that the museum has a fountain, benches, or the like. In this example, these obstacles may also be labeled, magnified, or the like to ensure that if the user(s) subsequently utilize the map corresponding to the first floor of the multi-story building for navigation purposes, that the user(s) are aware of the locations of those obstacles.

Although the above example describes the environment as being an indoor environment, it should be understood that is for the sake of example and is not meant to be limiting. Rather, it should be understood that techniques described herein can additionally, or alternatively, be utilized to generate map(s) of outdoor environments, such as parks, streets, parking garages, stadiums, ticket stations, and/or other outdoor environments. Further, although the above example is described with respect to the map corresponding to the first floor of the multi-story building, it should be understood that is also for the sake of example and is not meant to be limiting. Rather, it should be understood that the map can cover each floor of the multi-story building, a subset of the multiple floors of the multi-story building, a portion of the first floor of the multi-story building, a portion of an outdoor environment that surrounds the building, and/or other aspects in the environment. Moreover, although the above example includes particular points of interest, it should be understood that is also for the sake of example and is not meant to be limiting. Rather, it should be understood that the points of interest may be dependent on the environment and that the points of interest and information associated therewith are virtually limitless.

In various implementations, the localization request engine 140 may be configured to generate one or more requests for map(s) corresponding to environment(s) of user(s) and/or handle one or more of the requests for the map(s) corresponding to the environment(s) of the user(s). The one or more requests can include, for example, pre-warm requests, batch requests, and/or other requests. In some implementations, a pre-warm request may include, for example, building identifiers for any buildings that are locationally proximate to the client device 110 (e.g., determined based on location data generated by location sensor(s) of the client device 110), building identifiers for any buildings that are recognized based on processing vision data generated by vision component(s) of the client device 110 (e.g., determined based on processing the vision data using a building classifier that is trained to recognize buildings for which maps have been previously generated), building identifiers for any buildings that are specified by a user of the client device 110 (e.g., determined based on user input received via a software application that is accessible by the client device 110), and/or other information. Accordingly, when the localization system 120 subsequently obtains vision data to localize the user of the client device 110, the localization request engine 140 can ensure that the localization system 120 is up and running, and ensure that the localization system 120 has some prior knowledge of which maps to consider in localizing the user of the client device 110.

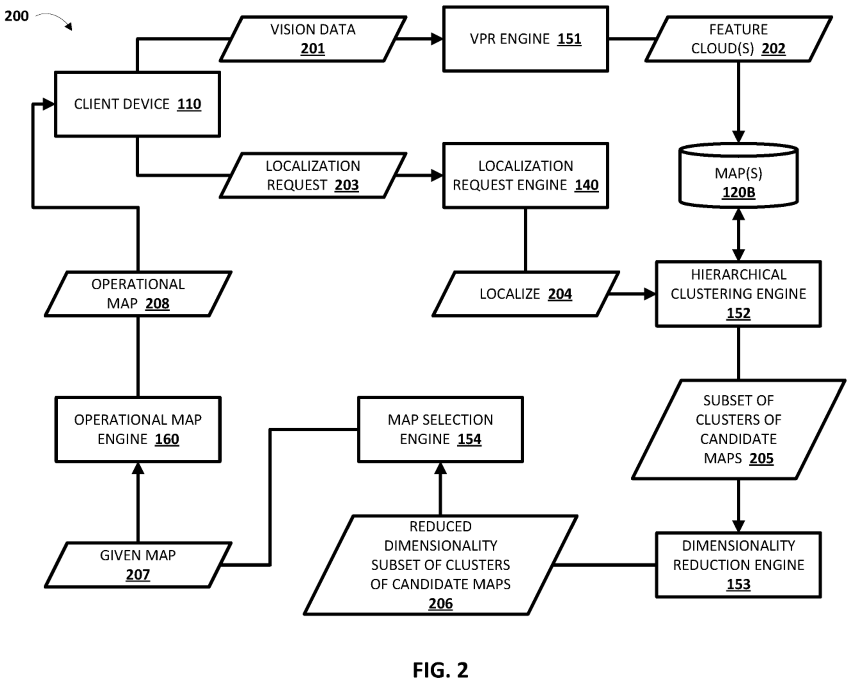

In some implementations, a batch request may include, for example, vision data that is captured by vision component(s) of the client device 110 and that is to be utilized in localizing the user of the client device 110, a request to localize the user of the client device 110, the building identifiers that were included in the pre-warm request, and/or other information. Accordingly, when the localization system 120 obtains the batch request, the localization system 120 can leverage information that was included in the pre-warm request to localize the user of the client device 110 based on the vision data that is included in the batch request. The pre-warm requests and batch requests are described in more detail herein (e.g., with respect to FIG. 2).

In various implementations, the VPR engine 151 may be configured to process vision data, such as images or videos captured by the client device 110, to generate or extract feature clouds representative of the environment. For example, the VPR engine 151 can process the vision data, using a CNN with a NetVLAD layer, to generate or extract NetVLAD features that may be utilized as feature clouds to aid in visual place recognition (VPR). In some implementations, the NetVLAD features for each scan can be loaded separately. The NetVLAD features may facilitate comparisons of image-based information for initial visual place recognition. As another non-limiting example, the VPR engine 151 can process the vision data to generate or extract DINOv2 features that may be utilized as feature clouds to aid in visual place recognition (VPR).

In various implementations, the hierarchical clustering engine 152 may be configured to organize feature clouds into groups based on their relative distances. For example, an agglomerative clustering algorithm can be employed to group feature clouds for each scan independently, thereby dividing each scan into multiple small clusters without needing a prespecified number of clusters. These clusters may then be compared against incoming feature vectors to select the most similar scans for the feature cloud and/or additional feature clouds that are generated or extracted based on additional vision data from the scan of the environment or an additional scan of the environment.

In various implementations, the dimensionality reduction engine 153 may be configured to reduce the dimensionality of the clusters using a dimensionality reduction algorithm, such as principal component analysis (PCA), to create smaller vector sizes, for example. By way of example, the dimensionality reduction engine 153 can load all feature vectors of each cluster, perform PCA shape reduction of each cluster to a smaller vector size, collect all of the reduced data, and save the reduced data to a file. This dimensionality reduction can facilitate faster loading of the clusters and can improve performance by conserving computational resources.

In various implementations, the map selection engine 154 may be configured to receive, as input, a reduced dimensionality subset of clusters of candidate maps from the dimensionality reduction engine 153, and select a map to be utilized as an operational map for the environment of the user. For example, the map selection engine 154 may compare the reduced dimensionality subset of clusters of candidate maps to stored feature vectors, and then select the map corresponding to the feature vector with the smallest distance, or highest similarity, based on the comparison. The map selection engine 154 may employ a distance matching algorithm to compare the reduced dimensionality subset of candidate maps to previously generated operational maps and then select one or more of those previously generated operational maps to be the given map.

In various implementations, the operational map engine 160 may be configured to cause the given map, determined based on the processing by the localization engine 150, to be utilized as an operational map for the environment of the user. In some versions of those implementations (e.g., and as described with respect to FIG. 4A), the operational map engine 160 may utilize the operational map to provide the user of the client device 110 with information about points of interest in the environment of the user (e.g., information that was utilized to augment the given map as described with respect to the map generation engine 130). In additional or alternative versions of those implementations (e.g., and as described with respect to FIG. 4B), the operational map engine 160 may utilize the operational map to provide the user of the client device 110 with navigational directions to navigate the environment of the user (e.g., information that was utilized to augment the given map as described with respect to the map generation engine 130). Notably, the operational map engine 160 may interact with a software application that is accessible by the client device 110 (e.g., via the application engine 113) to provide the information about points of interest in the environment of the user and/or to provide the navigational directions to navigate the environment of the user.

Although FIG. 1 is described with respect to a single client device having a single user, it should be understood that is for the sake of example and is not meant to be limiting. For example, one or more additional client devices of a user or other users (e.g., client device(s) 170) can also implement the techniques described herein. For instance, the client device 110, the one or more additional client devices, and/or any other computing devices of the user can form an ecosystem of devices that can employ techniques described herein. These additional client devices and/or computing devices may be in communication with the client device 110 (e.g., over the network(s) 199).

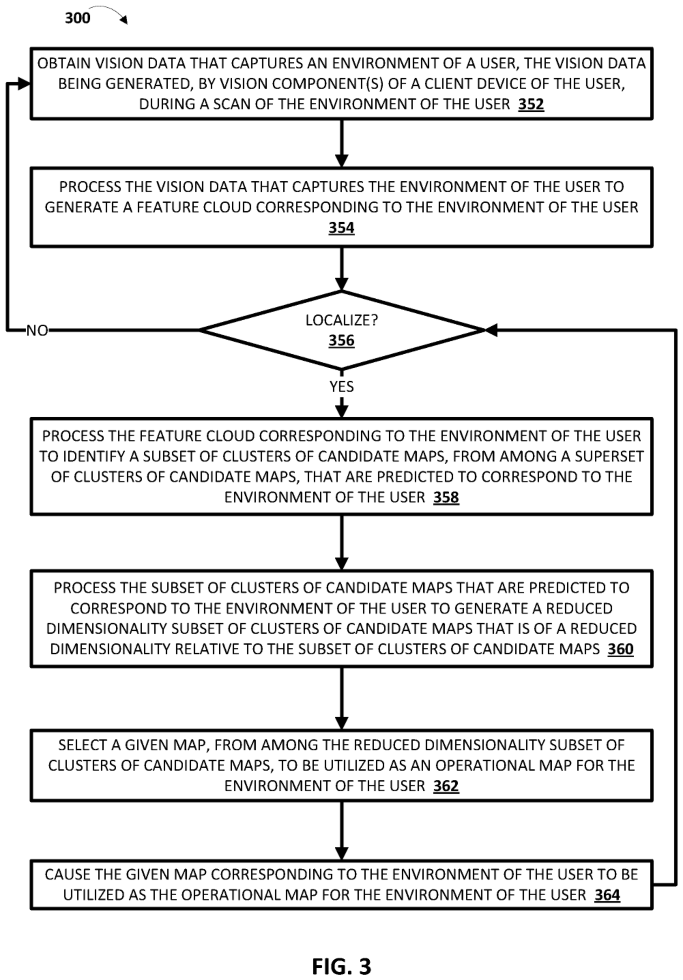

Turning now to FIG. 2, an example process flow 200 of localization of a user in an environment is depicted. For the sake of example, assume that a user of the client device 110 launches a software application at the client device 110. In this example, when the software application is launched, the client device 110 can begin generating vision data 201 as a scan of the environment of the user. As the vision data 201 is generated, the VPR engine 151 can process the vision data to generate or extract feature cloud(s) 202 that can be stored in the map(s) database 120B (or another database) for utilization in localizing the user (e.g., as described with respect to block 358 of FIG. 3).

Further, when the software application is launched at the client device 110, this can be utilized as a signal to generate a localization request 203 to localize the user of the client device 110 in an environment in which the user is located (although it should be understood that other signals to localize the user of the client device 110 are contemplated herein). The localization request engine 140 can process the localization request 203 and being to localize 204 the user of the client device 110.

In localizing the user of the client device 100, the VPR engine 151 can generate or extract a feature cloud corresponding to the environment of the user based on the vision data 201 (e.g., a most recently received image from the client device 110). Further, the hierarchical clustering engine 152 can load clustering data for each scan (e.g., obtained from the map(s) database 120B or another database), and can compare the feature cloud corresponding to the environment of the user to identify a subset of clusters of candidate maps 205, and optionally utilizing other features clouds from the scan or an additional scan to identify an additional subset of clusters of candidate maps, that are similar to the feature cloud of the environment of the user.

Further, the dimensionality reduction engine 153 can generate a reduced dimensionality subset of clusters of candidate maps 206 (e.g., using principal component analysis, or some other dimensionality reduction algorithm), and provide the reduced dimensionality subset of clusters of candidate maps 206 to the map selection engine 154. The map selection engine 154 can select a given map, from the reduced dimensionality subset of clusters of candidate maps 206 to identify a given map 207 that corresponds to the environment of the user. The operational map engine 160 can cause the given map 207 to be utilized as an operational map 208 for the environment of the user, which can be provided to the client device 110 for utilization in various ways (e.g., as described with respect to FIGS. 4A and 4B).

Although FIG. 2 depicts particular operations being performed by the client device 110 and the localization system 120 from FIG. 1, it should be understood that the process flow 200 of FIG. 2 is provided to demonstrate some techniques contemplated herein and is not meant to be limiting.

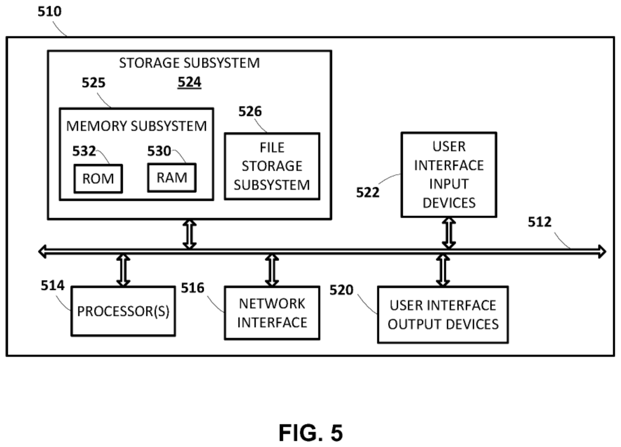

Turning now to FIG. 3, a flowchart illustrating an example method 300 of utilizing a multi-scan localization technique to localize a user in an environment is depicted. For convenience, the operations of the method 300 are described with reference to a system that performs the operations. This system of the method 300 includes one or more processors, memory, and/or other component(s) of computing device(s) (e.g., client device 110 of FIG. 1, localization system 120 of FIG. 1, client device 410 of FIGS. 4A and 4B, computing device 510 of FIG. 5, one or more servers, and/or other computing devices). Moreover, while operations of the method 300 are shown in a particular order, this is not meant to be limiting. One or more operations may be reordered, omitted, and/or added.

At block 352, the system obtains vision data that captures an environment of a user, the vision data being generated, by vision component(s) of a client device of the user, during a scan of the environment of the user. For example, the system can obtain the vision data from the sensor engine 114 of the client device 110 shown in FIG. 1. The scan of the environment of the user can include, for example, a first scan of the environment of the user, a partial scan of the environment of the user, a complete scan of the environment of the user, etc. In some implementations, the scan of the environment can include a single image whereas, in other implementations, the scan of the environment can include a sequence of images that are captured by the vision component(s) of the client device. For example, the sequence of images may include frames of video captured by the vision component(s) of the client device.

At block 354, the system processes the vision data that captures the environment of the user to generate (or extract) a feature cloud corresponding to the environment of the user. For example, the system can cause the VPR engine 151 to process the vision data to generate (or extract) the feature cloud corresponding to the environment of the user. In some implementations, and in generating the feature cloud, the VPR engine 151 can process, using a CNN that includes a NetVLAD layer, the vision data that captures the environment of the user to generate or extract the feature cloud corresponding to the environment of the user as NetVLAD features. In additional or alternative implementations, and in generating the feature cloud, the VPR engine 151 can process, using DINOv2, the vision data that captures the environment of the user to generate or extract the feature cloud corresponding to the environment of the user.

At block 356, the system determines whether to localize the user in the environment. For example, the system can cause the localization request engine 140 to determine whether a request from the client device has been received to localize the user in the environment. The localization request can be received, for example, when the user launches a software application at the client device that is associated with the localization system, when a certain duration of time has elapsed since a last localization request, when the user has navigated a threshold distance through the environment, when a current operational map no longer corresponds to a current state of the user in the environment of the user, and/or based on other conditions.

If, at an iteration of block 356, the system determines not to localize the user in the environment (e.g., the system determines that the user has been localized before, a pre-warm request has not been received, etc.), the system can return to block 352 to obtain additional vision data that captures the environment of the user during the scan of the environment of the user or during an additional scan of the environment of the user and continue with the method 300 of FIG. 3. Put another way, the system can continue to monitor the environment of the user until a request is received to localize the user in the environment. If, at an iteration of block 356, the system determines to localize the user in the environment, the system can proceed to block 358.

At block 358, the system processes the feature cloud corresponds to the environment of the user to identify a subset of clusters of candidate maps, from among a superset of clusters of candidate maps, that are predicted to correspond to the environment of the user. For example, the system can cause the hierarchical clustering engine 152 to process the feature cloud corresponding to the environment of the user to identify the subset of clusters of candidate maps, from among the superset of clusters of candidate maps, that are predicted to correspond to the environment of the user. In some implementations, and in identifying the subset of clusters of candidate maps, the hierarchical clustering engine 152 can process, using an agglomerative clustering algorithm, the feature cloud corresponding to the environment of the user to identify the subset of clusters of candidate maps, from among the superset of clusters of candidate maps, that are predicted to correspond to the environment of the user. In some implementations, the system can also obtain additional vision data (e.g., from the scan of the environment of the user or from an additional scan of the environment of the user) and process the additional vision data (e.g., as described with respect to blocks 354 and 358) to generate or extract an additional feature cloud, and identify an additional subset of clusters of the candidate maps, from among the superset of clusters of candidate maps, that are predicted to correspond to an additional environment of the user based on processing the additional feature cloud. In these implementations, the system can select one of the subset of clusters of candidate maps or the additional subset of clusters of the candidate maps that is most similar to the feature cloud generated or extracted based on the vision data that captures the environment of the user for further processing (e.g., at block 360).

At block 360, the system processes the subset of clusters of candidate maps that are predicted to correspond to the environment of the user to generate a reduced dimensionality subset of clusters of candidate maps that is of a reduced dimensionality relative to the subset of clusters of candidate maps. For example, the system can cause the dimensionality reduction engine 153 to process the subset of clusters of candidate maps that are predicted to correspond to the environment of the user to generate the reduced dimensionality subset of clusters of candidate maps that is of a reduced dimensionality relative to the subset of clusters of candidate maps. In some implementations, and in generating the reduced dimensionality subset of candidate maps, the dimensionality reduction engine 153 can process, using a dimensionality reduction algorithm (e.g., principal component analysis), the subset of clusters of candidate maps that are predicted to correspond to the environment of the user to generate the reduced dimensionality subset of candidate maps based on at least the dimensionality reduction algorithm.

At block 362, the system selects a given map, from among the reduced dimensionality subset of clusters of candidate maps, to be utilized as an operational map for the environment of the user. For example, the system can cause the map selection engine 154 to select the given map, from among the reduced dimensionality subset of clusters of candidate maps, to be utilized as the operational map for the environment of the user. In some implementations, and in selecting the given map, the map selection engine 154 can utilize a distance matching algorithm to compare the reduced dimensionality subset of candidate maps to one or more previously generated operational maps and select one or more of those previously generated operational maps to be the given map.

At block 364, the system causes the given map corresponding to the environment of the user to be utilized as the operational map for the environment of the user. For example, the system can cause the operational map engine 160 to cause the given map corresponding to the environment of the user to be utilized as the operational map for the environment of the user (e.g., as described with respect to FIGS. 4A and 4B).

Turning now to FIGS. 4A and 4B, various non-limiting examples of utilizing an operational map determined based on localization of a user in an environment are depicted. For the sake of example, assume that a user of a client device 410 (e.g., an instance of the client device 110 from FIG. 1) has entered a museum, and that the user of the client device 410 is interacting with a software application that leverages the capabilities of a localization system described herein (e.g., the localization system 120 from FIG. 1). Further assume that the localization system has determined a given map to be utilized as an operational map for the museum, or a portion of the museum, in which the user is located. The client device 410 may include, for example, a user input field 411 which the user of the client device 410 may direct typed input via a virtual keyboard (not depicted) and/or spoken input (and optionally subsequent to actuation of a microphone interface element or speaking a particular word or phrase to enable speech recognition). Further, the client device 410 may include, for example, a touch-sensitive display 412 that the user can interact with and view visual content that is rendered on the display 412. Moreover, the client device 410 may include, for example, one or more speakers via which audible content can be rendered for presentation to the user. Although the client device 410 is depicted as a mobile phone having certain capabilities, it should be understood that is for the sake of example and is not meant to be limiting and that other client devices are contemplated herein.

Referring specifically to FIG. 4A, assume that the user is viewing an artifact in an augmented environment as indicated at 412A1. The artifact in the augmented environment may be considered a point of interest, and, in previously generating the given map, information about the artifact may be provided. For instance, the information can identify a name of the artifact as indicated at 412A2, origin information associated with the artifact, provenance associated with the artifact, and/or other information associated with the artifact. Notably, the information can be visually rendered for presentation to the user via the display 412 and/or can be audibly rendered for presentation to the user via one or more speakers of the client device 410.

In various implementations, the user may be provided with various options to control a level of detail of the information provided as the user views the artifact via the display 412. For example, a "show more" selectable element 412A3 may be provided that, when selected, causes more detailed information about the artifact to be provided. As another example, a "show less" selectable element 412A4 may be provided that, when selected, causes less detailed information about the artifact to be provided. Notably, as the user moves a field of view of vision component(s) of the client device 410 around the environment, the display 412 may be dynamically updated with information about other points of interest included in the environment that enter the field of view of the vision component(s) of the client device 410.

Referring specifically to FIG. 4B, assume that the user directed user input of "bathroom" to the user input field 411. In this example, navigational directions can be provided to a bathroom in the environment as indicated by 412B1. The navigational directions can be, for example, turn-by-turn directions to enable the user to efficiently navigate to a desired location (e.g., a bathroom in the example of FIG. 4B). Notably, as the user moves a field of view of vision component(s) around the environment while navigating to the bathroom, the display 412 may be dynamically updated with information about other points of interest included in the environment that enter the field of view of the vision component(s) as indicated by 412B2. Accordingly, as the user navigates to the bathroom, obstacles in the environment can be identified and augmented to ensure that the user can avoid them while navigating.

Although FIGS. 4A and 4B depict particular examples of how an operational map can be utilized, it should be understood that these examples are not meant to be limiting. Rather, it should be understood that the operational map can be utilized for additional, or alternative, purposes. For example, the operational maps can be utilized by first responders to navigate unfamiliar buildings, by various users to consume interactive virtual tours, by building operators to track assets within a building to mitigate lost assets, and/or for other purposes.

Turning now to FIG. 5, a block diagram of an example computing device 510 that may optionally be utilized to perform one or more aspects of techniques described herein is depicted. In some implementations, one or more of a client device, localization system, and/or other component(s) may comprise one or more components of the example computing device 510.

Computing device 510 typically includes at least one processor 514 which communicates with a number of peripheral devices via bus subsystem 512. These peripheral devices may include a storage subsystem 524, including, for example, a memory subsystem 525 and a file storage subsystem 526, user interface output devices 520, user interface input devices 522, and a network interface subsystem 516. The input and output devices allow user interaction with computing device 510. Network interface subsystem 516 provides an interface to outside networks and is coupled to corresponding interface devices in other computing devices.

User interface input devices 522 may include a keyboard, pointing devices such as a mouse, trackball, touchpad, or graphics tablet, a scanner, a touch screen incorporated into the display, audio input devices such as voice recognition systems, microphones, and/or other types of input devices. In general, use of the term "input device" is intended to include all possible types of devices and ways to input information into computing device 510 or onto a communication network.

User interface output devices 520 may include a display subsystem, a printer, a fax machine, or non-visual displays such as audio output devices. The display subsystem may include a cathode ray tube (CRT), a flat-panel device such as a liquid crystal display (LCD), a projection device, or some other mechanism for creating a visible image. The display subsystem may also provide non-visual display such as via audio output devices. In general, use of the term "output device" is intended to include all possible types of devices and ways to output information from computing device 510 to the user or to another machine or computing device.

Storage subsystem 524 stores programming and data constructs that provide the functionality of some or all of the modules described herein. For example, the storage subsystem 524 may include the logic to perform selected aspects of the methods disclosed herein, as well as to implement various components depicted in FIGS. 1 and 2.

These software modules are generally executed by processor 514 alone or in combination with other processors. Memory 525 used in the storage subsystem 524 can include a number of memories including a main random access memory (RAM) 530 for storage of instructions and data during program execution and a read only memory (ROM) 532 in which fixed instructions are stored. A file storage subsystem 526 can provide persistent storage for program and data files, and may include a hard disk drive, a floppy disk drive along with associated removable media, a CD-ROM drive, an optical drive, or removable media cartridges. The modules implementing the functionality of certain implementations may be stored by file storage subsystem 526 in the storage subsystem 524, or in other machines accessible by the processor(s) 514.

Bus subsystem 512 provides a mechanism for letting the various components and subsystems of computing device 510 communicate with each other as intended. Although bus subsystem 512 is shown schematically as a single bus, alternative implementations of the bus subsystem 512 may use multiple busses.

Computing device 510 can be of varying types including a workstation, server, computing cluster, blade server, server farm, or any other data processing system or computing device. Due to the ever-changing nature of computers and networks, the description of computing device 510 depicted in FIG. 5 is intended only as a specific example for purposes of illustrating some implementations. Many other configurations of computing device 510 are possible having more or fewer components than the computing device depicted in FIG. 5.

In situations in which the systems described herein collect or otherwise monitor personal information about users, or may make use of personal and/or monitored information), the users may be provided with an opportunity to control whether programs or features collect user information (e.g., information about a user's social network, social actions or activities, profession, a user's preferences, or a user's current geographic location), or to control whether and/or how to receive content relevant to the user. Also, certain data may be treated in one or more ways before it is stored or used, so that personal identifiable information is removed. For example, a user's identity may be treated so that no personal identifiable information can be determined for the user, or a user's geographic location may be generalized where geographic location information is obtained (such as to a city, ZIP code, or state level), so that a particular geographic location of a user cannot be determined. Thus, the user may have control over how information is collected about the user and/or used.

In some implementations, a method is implemented by processor(s) and includes obtaining vision data that captures an environment of a user, the vision data being generated, by one or more vision components of a client device of the user, during a given scan of the environment of the user. The method further includes processing the vision data that captures the environment of the user to generate a feature cloud corresponding to the environment of the user. The method further includes processing the feature cloud corresponding to the environment of the user to identify a subset of clusters of candidate maps, from among a superset of clusters of candidate maps, that are predicted to correspond to the environment of the user. The method further includes processing the subset of clusters of candidate maps that are predicted to correspond to the environment of the user to generate a reduced dimensionality subset of clusters of candidate maps that is of a reduced dimensionality relative to the subset of clusters of candidate maps. The method further includes selecting a given map, from among the reduced dimensionality subset of clusters of candidate maps, to be utilized as an operational map for the environment of the user. The method further includes causing the given map corresponding to the environment of the user to be utilized as the operational map for the environment of the user.

These and other implementations of technology disclosed herein can optionally include one or more of the following features.

In some implementations, the method can further include obtaining additional vision data that captures the environment of the user, the additional vision data being generated, by one or more of the vision components of a client device of the user, during the given scan of the environment of the user or during an additional scan of the environment. The method can further include processing the additional vision data that captures the environment of the user to generate an additional feature cloud corresponding to the environment of the user. The method can further include processing the additional feature cloud corresponding to the environment of the user to identify an additional subset of clusters of candidate maps, from among the superset of clusters of candidate maps, that are predicted to correspond to the environment of the user. The method can further include determining to further process the subset of clusters of candidate maps, in lieu of the additional subset of clusters of candidate maps, based on corresponding confidence scores associated with the respective subsets of clusters of candidate maps.

In some implementations, the method can further include obtaining additional vision data that captures the environment of the user, the additional vision data being generated, by one or more of the vision components of a client device of the user, during the given scan of the environment of the user. The method can further include processing the additional vision data that captures the environment of the user to generate an additional feature cloud corresponding to the environment of the user. The method can further include processing the additional feature cloud corresponding to the environment of the user to identify an additional subset of clusters of candidate maps, from among the superset of clusters of candidate maps, that are predicted to correspond to the environment of the user. The method can further include processing the additional subset of clusters of candidate maps that are predicted to correspond to the environment of the user to generate an additional reduced dimensionality subset of clusters of candidate maps that is of a reduced dimensionality relative to the additional subset of clusters of candidate maps. The method can further include one of: verifying, from among the additional reduced dimensionality subset of clusters of candidate maps, the selection of given map to be utilized as the operational map for the environment of the user; or selecting a given additional map, from among the reduced dimensionality subset of clusters of candidate maps, to be utilized as the operational map for the environment of the user.

In some versions of those implementations, the vision data can be an image, the additional vision data can be an additional image, the image and the additional image can be captured in a sequence of images during the given scan of the environment of the user, and the sequence of images captured during the given scan of the environment of the user can be captured while the user is navigating through the environment.

In additional or alternative versions of those implementations, the subset of clusters of candidate maps can correspond to N candidate maps that are predicted to correspond to the environment of the user, the additional subset of clusters of candidate maps can correspond to N candidate maps that are predicted to correspond to the environment of the user, and N can be a positive integer greater than one.

In some implementations, the subset of clusters of candidate maps can correspond to N candidate maps that are predicted to correspond to the environment of the user, and N can be a positive integer greater than one.

In some implementations, the method can further include obtaining additional vision data that captures the environment of the user, the additional vision data being generated, by one or more of the vision components of a client device of the user, during a given additional scan of the environment of the user. The method can further include processing the additional vision data that captures the environment of the user to generate an additional feature cloud corresponding to the environment of the user. The method can further include processing the additional feature cloud corresponding to the environment of the user to identify an additional subset of clusters of candidate maps, from among the superset of clusters of candidate maps, that are predicted to correspond to the environment of the user. The method can further include processing the additional subset of clusters of candidate maps that are predicted to correspond to the environment of the user to generate an additional reduced dimensionality subset of clusters of candidate maps that is of a reduced dimensionality relative to the additional subset of clusters of candidate maps. The method can further include one of: verifying, from among the additional reduced dimensionality subset of clusters of candidate maps, the selection of given map to be utilized as the operational map for the environment of the user; or selecting a given additional map, from among the reduced dimensionality subset of clusters of candidate maps, to be utilized as the operational map for the environment of the user.

In some versions of those implementations, the vision data can be an image, the additional vision data can be an additional image, the image can be captured in a sequence of images during the given scan of the environment of the user, the additional image can be captured in an additional sequence of images during the given additional scan of the environment of the user, and the sequence of images captured during the given scan of the environment of the user and the additional sequence of images captured during the given additional scan of the environment of the user can be captured while the user is navigating through the environment.

In additional or alternative versions of those implementations, the subset of clusters of candidate maps can correspond to N candidate maps that are predicted to correspond to the environment of the user, the additional subset of clusters of candidate maps can correspond to N candidate maps that are predicted to correspond to the environment of the user, and N can be a positive integer greater than one.

In some implementations, the method can further include receiving, from the client device of the user, a localization request to localize the user in the environment. Processing the vision data that captures the environment of the user to generate the feature cloud corresponding to the environment of the user can be prior to receiving the localization request to localize the user in the environment. Further, processing the feature cloud corresponding to the environment of the user to identify the subset of clusters of candidate maps that are predicted to correspond to the environment of the user can be in response to receiving the localization request to localize the user in the environment.

In some versions of those implementations, the feature cloud corresponding to the environment of the user can be stored at a storage device, and the feature cloud corresponding to the environment of the user can be obtained from the storage device in response to receiving the localization request to localize the user in the environment.

In additional or alternative versions of those implementations, an additional feature cloud corresponding to the environment of the user, that is generated based on additional vision data generated during the given scan of the environment of the user or during an additional scan of the environment, can be obtained from the storage device in response to receiving the localization request to localize the user in the environment.

In some further versions of those implementations, identifying the subset of clusters of candidate maps, from among a superset of clusters of candidate maps, that are predicted to correspond to the environment of the user can be further based on processing the additional feature cloud corresponding to the environment of the user.

In some implementations, causing the given map corresponding to the environment of the user to be utilized as the operational map for the environment of the user can include causing the operational map to be utilized by the client device of the user to provide the user with navigational directions from a current location of the user in the environment and to a given point of interest in the environment that is specified by the user via the client device of the user.

In some implementations causing the given map corresponding to the environment of the user to be utilized as the operational map for the environment of the user can include causing the operational map to be utilized by the client device of the user to provide the user with information related to a plurality of points of interest in the environment.

In some implementations, the method can further include, prior to obtaining the vision data that captures the environment of the user during the given scan of the environment of the user: generating a plurality of maps, the plurality of maps including the given map corresponding to the environment of the user and a plurality of additional maps of other environments; and clustering the plurality of maps to generate the superset of clusters of candidate maps.

In some versions of those implementations, generating the given map can include obtaining mapping vision data that captures the environment of the user, the mapping vision data being generated by one or more additional vision components, and the one or more additional vision components being associated with: an additional user that is manually traversing through the environment of the user, or a robot that is autonomously or semi-autonomously traversing through the environment of the user; and generating, based on the mapping vision data, the given map corresponding to the environment of the user.

In some further versions of those implementations, the method can further include augmenting the given map corresponding to the environment of the user with information related to points of interest included in the environment of the user. Augmenting the given map corresponding to the environment of the user with information related to the points of interest included in the environment of the user can include obtaining user input that: labels the points of interest in the environment of the user; provides various levels of information about the points of interest in the environment of the user; assigns semantic properties to the points of interest in the environment; magnifies one or more obstacles in the environment of the user; or draws shapes around one or more of the obstacles in the environment of the user.

In additional or alternative versions of those implementations, clustering the plurality of maps to generate the superset of clusters of candidate maps can include: processing corresponding mapping vision data, for each of the plurality of maps, to generate a corresponding feature cloud; and processing the corresponding feature clouds, for each of the plurality of maps, to generate the superset of clusters of candidate maps.

In some implementations, the environment of the user can correspond to an indoor environment of a building, and each of the candidate maps can be associated with: the building, a corresponding floor of the building, a portion of the corresponding floor of the building, or an outdoor environment that surrounds the building.

In some implementations, processing the vision data that captures the environment of the user to generate the feature cloud corresponding to the environment of the user can be using a visual place recognition (VPR) algorithm. In some versions of those implementations, the VPR algorithm can be one of: NetVLAD or DINOv2.

In some implementations, processing the feature cloud corresponding to the environment of the user to identify the subset of clusters of candidate maps that are predicted to correspond to the environment of the user can be using a hierarchical clustering algorithm. In some versions of those implementations, the hierarchical clustering algorithm can be an agglomerative clustering algorithm.

In some implementations, processing the subset of clusters of candidate maps that are predicted to correspond to the environment of the user to generate the reduced dimensionality subset of clusters of candidate maps that is of a reduced dimensionality relative to the subset of clusters of candidate maps can be using a dimensionality reduction algorithm. In some versions of those implementations, the dimensionality reduction algorithm can be a principal component analysis algorithm.

In some implementations, selecting the given map to be utilized as the operational map for the environment of the user can be using a distance matching algorithm.

In some implementations, the method can further include obtaining location data corresponding to a location of the environment of a user, the location data being generated, by one or more location sensors of the client device of the user, during the given scan of the environment of the user. Identifying the subset of clusters of candidate maps that are predicted to correspond to the environment of the user can be further based on the location data.

In addition, some implementations include one or more processors (e.g., central processing unit(s) (CPU(s)), graphics processing unit(s) (GPU(s), and/or tensor processing unit(s) (TPU(s)) of one or more computing devices, where the one or more processors are operable to execute instructions stored in memory, and where the instructions are configured to cause performance of any of the aforementioned methods. Some implementations also include one or more non-transitory computer readable storage media storing computer instructions executable by one or more processors to perform any of the aforementioned methods. Some implementations also include a computer program product including instructions executable by one or more processors to perform any of the aforementioned methods.

## Claims

1. A method implemented by one or more processors, the method comprising:
obtaining vision data that captures an environment of a user, the vision data being generated, by one or more vision components of a client device of the user, during a given scan of the environment of the user;
processing the vision data that captures the environment of the user to generate a feature cloud corresponding to the environment of the user;
processing the feature cloud corresponding to the environment of the user to identify a subset of clusters of candidate maps, from among a superset of clusters of candidate maps, that are predicted to correspond to the environment of the user;
processing the subset of clusters of candidate maps that are predicted to correspond to the environment of the user to generate a reduced dimensionality subset of clusters of candidate maps that is of a reduced dimensionality relative to the subset of clusters of candidate maps;
selecting a given map, from among the reduced dimensionality subset of clusters of candidate maps, to be utilized as an operational map for the environment of the user; and
causing the given map corresponding to the environment of the user to be utilized as the operational map for the environment of the user.

2. The method of claim 1, further comprising:
obtaining additional vision data that captures the environment of the user, the additional vision data being generated, by one or more of the vision components of a client device of the user, during the given scan of the environment of the user or during an additional scan of the environment;
processing the additional vision data that captures the environment of the user to generate an additional feature cloud corresponding to the environment of the user;
processing the additional feature cloud corresponding to the environment of the user to identify an additional subset of clusters of candidate maps, from among the superset of clusters of candidate maps, that are predicted to correspond to the environment of the user; and
determining to further process the subset of clusters of candidate maps, in lieu of the additional subset of clusters of candidate maps, based on corresponding confidence scores associated with the respective subsets of clusters of candidate maps.

3. The method of claim 1, further comprising:
obtaining additional vision data that captures the environment of the user, the additional vision data being generated, by one or more of the vision components of a client device of the user, during the given scan of the environment of the user;
processing the additional vision data that captures the environment of the user to generate an additional feature cloud corresponding to the environment of the user;
processing the additional feature cloud corresponding to the environment of the user to identify an additional subset of clusters of candidate maps, from among the superset of clusters of candidate maps, that are predicted to correspond to the environment of the user;
processing the additional subset of clusters of candidate maps that are predicted to correspond to the environment of the user to generate an additional reduced dimensionality subset of clusters of candidate maps that is of a reduced dimensionality relative to the additional subset of clusters of candidate maps; and
one of:
verifying, from among the additional reduced dimensionality subset of clusters of candidate maps, the selection of given map to be utilized as the operational map for the environment of the user; or
selecting a given additional map, from among the reduced dimensionality subset of clusters of candidate maps, to be utilized as the operational map for the environment of the user.

4. The method of claim 3, wherein the vision data is an image, wherein the additional vision data is an additional image, wherein the image and the additional image are captured in a sequence of images during the given scan of the environment of the user, and wherein the sequence of images captured during the given scan of the environment of the user are captured while the user is navigating through the environment, and/or
wherein the subset of clusters of candidate maps corresponds to N candidate maps that are predicted to correspond to the environment of the user, wherein the additional subset of clusters of candidate maps corresponds to N candidate maps that are predicted to correspond to the environment of the user, and wherein N is a positive integer greater than one.

5. The method of any one of the preceding claims, wherein the subset of clusters of candidate maps corresponds to N candidate maps that are predicted to correspond to the environment of the user, and wherein N is a positive integer greater than one.

6. The method of claim 1, the method further comprising:
obtaining additional vision data that captures the environment of the user, the additional vision data being generated, by one or more of the vision components of a client device of the user, during a given additional scan of the environment of the user;
processing the additional vision data that captures the environment of the user to generate an additional feature cloud corresponding to the environment of the user;
processing the additional feature cloud corresponding to the environment of the user to identify an additional subset of clusters of candidate maps, from among the superset of clusters of candidate maps, that are predicted to correspond to the environment of the user;
processing the additional subset of clusters of candidate maps that are predicted to correspond to the environment of the user to generate an additional reduced dimensionality subset of clusters of candidate maps that is of a reduced dimensionality relative to the additional subset of clusters of candidate maps; and
one of:
verifying, from among the additional reduced dimensionality subset of clusters of candidate maps, the selection of given map to be utilized as the operational map for the environment of the user; or
selecting a given additional map, from among the reduced dimensionality subset of clusters of candidate maps, to be utilized as the operational map for the environment of the user.

7. The method of claim 6, wherein the vision data is an image, wherein the additional vision data is an additional image, wherein the image is captured in a sequence of images during the given scan of the environment of the user, wherein the additional image is captured in an additional sequence of images during the given additional scan of the environment of the user, and wherein the sequence of images captured during the given scan of the environment of the user and the additional sequence of images captured during the given additional scan of the environment of the user are captured while the user is navigating through the environment, and/or:
wherein the subset of clusters of candidate maps corresponds to N candidate maps that are predicted to correspond to the environment of the user, wherein the additional subset of clusters of candidate maps corresponds to N candidate maps that are predicted to correspond to the environment of the user, and wherein N is a positive integer greater than one.

8. The method of any one of the preceding claims, further comprising:
receiving, from the client device of the user, a localization request to localize the user in the environment;
wherein processing the vision data that captures the environment of the user to generate the feature cloud corresponding to the environment of the user is prior to receiving the localization request to localize the user in the environment; and
wherein processing the feature cloud corresponding to the environment of the user to identify the subset of clusters of candidate maps that are predicted to correspond to the environment of the user is in response to receiving the localization request to localize the user in the environment, and optionally:
wherein the feature cloud corresponding to the environment of the user is stored at a storage device, and wherein the feature cloud corresponding to the environment of the user is obtained from the storage device in response to receiving the localization request to localize the user in the environment.

9. The method of claim 8, wherein an additional feature cloud corresponding to the environment of the user, that is generated based on additional vision data generated during the given scan of the environment of the user or during an additional scan of the environment, is obtained from the storage device in response to receiving the localization request to localize the user in the environment, and optionally:
wherein identifying the subset of clusters of candidate maps, from among a superset of clusters of candidate maps, that are predicted to correspond to the environment of the user is further based on processing the additional feature cloud corresponding to the environment of the user.

10. The method of any one of the preceding claims, wherein causing the given map corresponding to the environment of the user to be utilized as the operational map for the environment of the user comprises one or more of:
causing the operational map to be utilized by the client device of the user to provide the user with navigational directions from a current location of the user in the environment and to a given point of interest in the environment that is specified by the user via the client device of the user; or
causing the operational map to be utilized by the client device of the user to provide the user with information related to a plurality of points of interest in the environment.

11. The method of any one of the preceding claims, further comprising:
prior to obtaining the vision data that captures the environment of the user during the given scan of the environment of the user:
generating a plurality of maps, the plurality of maps including the given map corresponding to the environment of the user and a plurality of additional maps of other environments; and
clustering the plurality of maps to generate the superset of clusters of candidate maps, wherein clustering the plurality of maps to generate the superset of clusters of candidate maps comprises:
processing corresponding mapping vision data, for each of the plurality of maps, to generate a corresponding feature cloud; and
processing the corresponding feature clouds, for each of the plurality of maps, to generate the superset of clusters of candidate maps.

12. The method of any one of the preceding claims, wherein processing the vision data that captures the environment of the user to generate the feature cloud corresponding to the environment of the user is using a visual place recognition (VPR) algorithm, and wherein the VPR algorithm is one of: NetVLAD or DINOv2.

13. The method of any one of the preceding claims, wherein processing the feature cloud corresponding to the environment of the user to identify the subset of clusters of candidate maps that are predicted to correspond to the environment of the user is using a hierarchical clustering algorithm, and wherein the hierarchical clustering algorithm is an agglomerative clustering algorithm, and/or
wherein processing the subset of clusters of candidate maps that are predicted to correspond to the environment of the user to generate the reduced dimensionality subset of clusters of candidate maps that is of a reduced dimensionality relative to the subset of clusters of candidate maps is using a dimensionality reduction algorithm, and wherein the dimensionality reduction algorithm is a principal component analysis algorithm.

14. A system comprising:
at least one processor; and
memory storing instructions that, when executed, cause the at least one processor to be operable to:
obtain vision data that captures an environment of a user, the vision data being generated, by one or more vision components of a client device of the user, during a given scan of the environment of the user;
process the vision data that captures the environment of the user to generate a feature cloud corresponding to the environment of the user;
process the feature cloud corresponding to the environment of the user to identify a subset of clusters of candidate maps, from among a superset of clusters of candidate maps, that are predicted to correspond to the environment of the user;
process the subset of clusters of candidate maps that are predicted to correspond to the environment of the user to generate a reduced dimensionality subset of clusters of candidate maps that is of a reduced dimensionality relative to the subset of clusters of candidate maps;
select a given map, from among the reduced dimensionality subset of clusters of candidate maps, to be utilized as an operational map for the environment of the user; and
cause the given map corresponding to the environment of the user to be utilized as the operational map for the environment of the user.

15. A non-transitory computer-readable storage medium storing computer executable instructions that, when executed by at least one processor, cause the at least one processor to:
obtain vision data that captures an environment of a user, the vision data being generated, by one or more vision components of a client device of the user, during a given scan of the environment of the user;
process the vision data that captures the environment of the user to generate a feature cloud corresponding to the environment of the user;
process the feature cloud corresponding to the environment of the user to identify a subset of clusters of candidate maps, from among a superset of clusters of candidate maps, that are predicted to correspond to the environment of the user;
process the subset of clusters of candidate maps that are predicted to correspond to the environment of the user to generate a reduced dimensionality subset of clusters of candidate maps that is of a reduced dimensionality relative to the subset of clusters of candidate maps;
select a given map, from among the reduced dimensionality subset of clusters of candidate maps, to be utilized as an operational map for the environment of the user; and
cause the given map corresponding to the environment of the user to be utilized as the operational map for the environment of the user.
